# EUROPÄISCHE PATENTSCHRIFT

(11) **EP 3 679 821 B1**
(45) Veröffentlichungstag und Bekanntmachung des Hinweises auf die Patenterteilung: **16.10.2024**
(21) Anmeldenummer: 20150325.7
(22) Anmeldetag: 06.01.2020
(51) Int. Cl.: A42B 3/04, A42B 3/06, F16B 37/12, F41H 1/04, F41H 1/08

(54) **BALLISTISCHER SCHUTZHELM**
BALLISTIC PROTECTIVE HELMET
CASQUE DE PROTECTION BALISTIQUE

(30) Priorität: 08.01.2019 DE 102019100278
(43) Veröffentlichungstag der Anmeldung: 15.07.2020
(73) Patentinhaber: Busch PROtective Germany GmbH & Co. KG, 33334 Gütersloh (DE)
(72) Erfinder: BUSCH, Edwin, 33334 Gütersloh (DE); EICHLER, Sebastian, 33378 Rheda-Wiedenbrück (DE); GEVERS, Karina, 33330 Gütersloh (DE)
(74) Vertreter: Seemann & Partner Patentanwälte mbB

(56) Entgegenhaltungen:
- EP-A2- 2 949 229
- EP-B1- 1 750 921
- DE-A1- 102014 019 516
- DE-A1- 19 961 371

## Beschreibung

Die Erfindung betrifft einen ballistischen Schutzhelm, umfassend eine Schale, umfassend ein Schalenmaterial, das aus einer Anzahl in einer Verbindungsmatrix verbundener textiler Lagen gefertigt ist.

Ein entsprechender ballistischer Schutzhelm, wie im Oberbegriff des unabhängigen Anspruchs 1 beschrieben, ist in EP 1 750 921 B1 gezeigt. Insbesondere wird dort ein Verfahren zur Herstellung eines ballistischen Schutzpanzers, insbesondere eines Schutzhelms, gezeigt. Ein mit einem derartigen Verfahren hergestellter ballistischer Schutzhelm hat viele Vorteile, da insbesondere der Schutz vor ballistischen Geschossen im Vergleich zu anderen Schutzpanzern bzw. Schutzhelmen deutlich verbessert ist.

Ballistische Schutzhelme dienen beispielsweise als militärische Helme oder Helme für Polizisten zum Schutz gegen Projektileinschläge und Granatsplitter. Derartige Schutzhelme werden üblicherweise aus mehreren textilen Lagen hochfesten technischen Gewebes hergestellt, das bei einer höheren Temperatur heißgepresst wird, so dass ein Laminat entsteht. Die textilen Lagen können hierbei zusätzlich vernäht werden, so dass die Dichte und Festigkeit des hergestellten Schichtgeleges gesteigert werden kann, womit die Schutzwirkung der Panzerung bzw. des Schutzhelms verbessert wird.

Zudem ist es bekannt, ballistische Schutzhelme aus laminierten textilen Lagen herzustellen, die die Energie eines aufprallenden Projektils weitgehend absorbieren. Dies geschieht dadurch, dass das Projektil die äußeren Lagen des Laminats durchschlägt, sich hierbei verformt und durch die verbleibenden Lagen an der zu schützenden Innenseite des Panzers aufgefangen wird, da die kinetische Energie nach der Zerstörung der Außenlagen bereits stark verringert ist. Hierbei lösen sich üblicherweise die verbleibenden Fanglagen von den durchschlagenen Außenlagen teilweise ab, so dass eine Ausbeulung zur Innenseite des Panzers hin entsteht, in der das Projektil verbleibt.

Die EP 1 750 921 B1 sieht nun vor, diesen Ausbeulungseffekt zu verringern, indem radiale Nähte vorgesehen sind, die den Delaminationseffekt der Fanglagen begrenzen.

DE 10 2014 019 516 A1 zeigt eine Baugruppe mit einem Kunststoffgehäuse. Mittels einer Schraube wird ein Deckel, der eine Kavität des Gehäuses verschließt, mit dem Gehäuse verbunden. Die Schraube weist eine Ausnehmung auf, so dass ein Bruchdrehmoment der Schraube im Bereich der Ausnehmung ein Minimum aufwe ist.

Zudem werden an derartigen ballistischen Schutzhelmen auch weitere Zubehörteile bzw. Komponenten angebracht. Diese Zubehörteile bzw. Komponenten können ein Nackenschutz, ein Sichtschutz, ein Ohrenschutz, ein Nachtsichtgerät, ein Leuchtmittel und andere Komponenten sein. Beispielsweise kann auch eine Art Clickrail verwendet werden, die insbesondere seitlich an den Schutzhelmen angebracht wird, um auf einfache und schnelle Art und Weise Zubehörteile lösbar an der Clickrail und damit an dem Helm zu befestigen.

Eine derartige Clickrail oder die Zubehörteile können an die Außenschale des Helms angeklebt werden oder mit einer durch die Schale des Schutzhelms gehende Schraubverbindung befestigt werden. Das Ankleben von Zubehörteilen hat den Nachteil, dass sich die Klebeverbindung im Einsatz durch Witterungseinflüsse lösen kann. Die durch die Schale des Schutzhelms gehende Schraubverbindung hat den Nachteil, dass bei einem ballistischen Geschoss, das auf diese Schraube trifft, durch Scherwirkung eine erhöhte Delamination der textilen Lagen geschieht, so dass die Schutzwirkung bei einem Schuss gegen genau diese Schraube verringert sein kann.

Es ist Aufgabe der vorliegenden Erfindung, einen ballistischen Schutzhelm anzugeben, mit dem es möglich ist, auf einfache und effiziente Weise Zubehörteile bzw. weitere Komponenten des ballistischen Schutzhelms lösbar fixierbar anzubringen, ohne die Schutzfunktion des Schutzhelms zu beeinträchtigen bzw. nur wenig zu beeinträchtigen.

Gelöst wird diese Aufgabe durch einen ballistischen Schutzhelm, wie im Anspruch 1 beschrieben, umfassend eine Schale, umfassend ein Schalenmaterial, das aus einer Anzahl in einer Verbindungsmatrix verbundener textiler Lagen gefertigt ist, wobei die Schale ein Sackloch aufweist, wobei eine Gewindehülse in das Sackloch eingebracht ist, wobei die Gewindehülse ein Außengewinde aufweist, das in das Schalenmaterial, das das Sackloch in Umfangsrichtung umgibt, eindringt und wobei die Gewindehülse ein Innengewinde zur Verbindung mit einem ein Außengewinde aufweisenden Schraubmittel aufweist.

Es wurde überraschenderweise festgestellt, dass die Verwendung einer Gewindehülse in einem Sackloch, das zur Verbindung mit einem ein Außengewinde aufweisenden Schraubmittel dient, die Delamination der textilen Lagen des Schichtgeleges der Schale des ballistischen Schutzhelms deutlich weniger schwächt als eine durch die Schale hindurchgehende Schraube.

Vorzugsweise ist das Sackloch außen in der Schale angeordnet, so dass die Fanglagen des Schutzhelms durch Vorsehen des Sacklochs nicht geschwächt werden.

Vorzugsweise ist die Gewindehülse aus einem Edelstahl, beispielsweise X5CrNi18-10 oder einem ähnlichen Stahl, gefertigt. Ferner vorzugsweise ist das Schraubmittel ebenfalls aus Edelstahl oder einem Automatenstahl, beispielsweise 11 SMnPb30 oder einem ähnlichen Stahl, gefertigt.

Wenn vorzugsweise die Gewindehülse in dem Sackloch eingeklebt ist, ist die Gewindehülse fester in der Schale verankert und ermöglicht so eine verlängerte Lebensdauer des ballistischen Schutzhelms.

Vorzugsweise ist die Gewindehülse für den üblichen Gebrauch des Schutzhelms fest in dem Schalenmaterial eingebracht.

Vorzugsweise hat das Sackloch eine Tiefe von 4 mm bis 10 mm, insbesondere 5 mm bis 8 mm, insbesondere 6 mm bis 7 mm.

Vorzugsweise hat das Sackloch eine Tiefe, die kleiner oder gleich ist als dreiviertel, insbesondere die Hälfte, der Dicke der Schale des ballistischen Schutzhelms.

Ferner vorzugsweise ist die Länge der Gewindehülse an die Tiefe des Sacklochs angepasst, insbesondere ist die Länge etwas kleiner als die Tiefe. Insbesondere ist die Tiefe zwischen 0,1 mm und 1 mm größer als die Länge der Gewindehülse.

Vorzugsweise ist die Gewindehülse bündig an der Oberseite des ballistischen Schutzhelms eingebracht.

Wenn vorzugsweise die Gewindeteilung des Außengewindes der Gewindehülse 1/7 bis 3/7, insbesondere 2/7, des eines Außendurchmessers der Gewindehülse ist, ist eine sehr stabile Befestigung der Gewindehülse in der Schale des ballistischen Schutzhelms möglich.

Vorzugsweise ist die Gewindetiefe des Außengewindes der Gewindehülse 3/28 bis 2/7, insbesondere 1/7, des Außendurchmessers der Gewindehülse. Hierbei wird ein Kompromiss zwischen einer Stabilität der Gewindehülse in der Schale des ballistischen Schutzhelms und ein möglichst kleiner negativer Einfluss auf die Delamination der textilen Lagen bei einem Treffen der Gewindehülse oder einem hiermit verbundenen Schraubmittel durch ein Projektil erzielt.

Die Gewindeteilung liegt vorzugsweise im Bereich von 1 mm bis 3 mm, insbesondere vorzugsweise bei 2 mm. Die Gewindetiefe liegt vorzugsweise bei 0,5 mm bis 2,0 mm, insbesondere vorzugsweise bei 1,0 mm.

Vorzugsweise ist die Wandstärke der Gewindehülse von 0,5 mm bis 3,0 mm, insbesondere von 0,8 mm bis 2,0 mm, insbesondere von 0,9 mm bis 1,5 mm, insbesondere von 1,0 mm bis 1,2 mm.

Die Wandstärke ist hierbei der Kerndurchmesser des Außengewindes abzüglich des Außendurchmessers des Innengewindes. Besonders bevorzugt ist die Wandstärke bei 1,0 mm. Diese Wandstärke alleine wäre bei einem Beschuss mit einem ballistischen Projektil nicht ausreichend sicher. Aus diesem Grunde ist es bevorzugt, wenn dem Benutzer deutlich gemacht wird, dass auf jeden Fall ein ein Außengewinde aufweisendes Schraubmittel in die Gewindehülse eingebracht sein muss. Hierzu ist vorzugsweise vorgesehen, dass die Gewindehülse wenigstens an einem Teil, der in einem Zustand, in dem die Gewindehülse in das Sackloch eingebracht ist, sichtbar ist, eine Warnfarbe aufweist. Diese Warnfarbe, die im Vergleich zur Farbe der Schale des ballistischen Schutzhelms eine deutlich kontrastierende Farbe ist, soll dem Benutzer deutlich machen, dass der Schutzhelm in dieser Form nicht einsatzfähig ist. Erst durch Einschrauben eines ein Außengewinde aufweisenden Schraubmittels, beispielsweise zum Befestigen eines Zubehörteils oder einer weiteren Komponente an den Schutzhelm oder, falls kein Zubehörteil angebracht werden soll, einer entsprechenden Schraube, die nach dem Einschrauben die Warnfarbe verdeckt, ist der ballistische Schutzhelm einsatzbereit. Wenn die Schale beispielsweise eine schwarze Farbe oder eine Anthrazitfarbe aufweist, könnte die, insbesondere deutlich kontrastierende, Farbe grell orange, grell rot oder grell gelb sein, also eine relativ helle und auffällige Farbe.

Vorzugsweise ist das das Außengewinde aufweisende Schraubmittel in die Gewindehülse eingeschraubt und weist insbesondere einen Kopf auf, der eine Kopfbreite aufweist, die zweimal bis viermal so groß wie ein Außendurchmesser des Außengewindes des Schraubmittels ist. Insbesondere ist die Kopfbreite wenigstens dreimal so groß wie der Außendurchmesser des Außengewindes des Schraubmittels. Die Kopfbreite ist im Rahmen der Erfindung so definiert, dass es sich um den Abstand zweier gegenüberliegenden Seiten oder Tangenten des Kopfes handelt. Es kann sich hierbei auch um den Durchmesser des Kopfes handeln, beispielsweise für den Fall, dass eine Rändelschraube verwendet wird. Bevorzugterweise wird allerdings eine an den Kanten abgerundete Sechskantschraube oder Außensechskantschraube verwendet.

Vorzugsweise ist die Dicke des Kopfes an der dünnsten Stelle größer als die Wandstärke der Gewindehülse. Hierdurch wird ein zusätzlicher ballistischer Schutz erzielt. Vorzugsweise ist die Dicke des Kopfes an der dünnsten Stelle zwischen 1,1- bis 2,5-fach so dick wie die Wandstärke der Gewindehülse. Vorzugsweise liegt der Faktor bei 1,4- bis 2-fach. Vorzugsweise ist die dickste Stelle mindestens doppelt so dick wie die Wandstärke der Gewindehülse, wobei diese insbesondere 2,1- bis 5-fach, insbesondere 2,2- bis 3-fach, so dick ist wie die Wandstärke der Gewindehülse.

Bevorzugterweise ist die Unterseite des Kopfes an die Kontur der Außenseite der Schale des ballistischen Schutzhelms angepasst. Insbesondere ist die Unterseite des Kopfes formkomplementär zu der Kontur der Außenseite der Schale.

In einer Ausführungsform ist der Kopf des Schraubmittels flach ausgebildet.

Gemäß einer weiteren Ausführungsform ist der ballistische Schutzhelm dadurch fortgebildet, dass die Gewindehülse einen Bund umfasst. Der Bund der Gewindehülse ist insbesondere ein flanschartiger Kragen, welcher den Durchmesser der Gewindehülse an einem ihrer beiden Kopfenden in radialer Richtung erweitert. Der Bund ist beispielsweise durchgehend und mit umlaufend gleicher Breite ausgeführt, er kann jedoch ebenso unterbrochen oder mit variierender Breite ausgeführt sein.

Die Gewindehülse weist im Bereich des Bunds einen Durchmesser auf, der zumindest näherungsweise einer Kopfbreite des in die Gewindehülse einschraubbaren Schraubmittels entspricht. Es kann ebenso vorgesehen sein, dass der Bund einen Durchmesser aufweist, der größer oder kleiner als die Kopfbreite des Schraubmittels ist. In jedem Fall überragt der Bund einen Durchmesser des Außengewindes der Gewindehülse. Es ist insbesondere vorgesehen, dass der Durchmesser des Bunds zweimal bis viermal, insbesondere dreimal, so groß wie ein Außendurchmesser des Schraubgewindes der Gewindehülse ist.

Vorzugsweise dient die Gewindehülse zum Anbringen von Komponenten, insbesondere Zubehörteilen, an den Schutzhelm, und zwar von außen, d.h. an die Außenseite.

Ferner ist insbesondere vorgesehen, dass die Gewindehülse zum Anbringen zumindest einer ersten und/oder zumindest einer zweiten Komponente dient. Die zumindest eine erste Komponente wird zwischen der Schale des Schutzhelms und dem Bund der Gewindehülse aufgenommen. Die zumindest eine zweite Komponente wird mittels des Schraubmittels an der Gewindehülse aufgenommen.

Die ersten und die zweiten Komponenten werden in zwei unterschiedlichen Ebenen, einer ersten und einer zweiten Ebene, aufgenommen. So besteht die Möglichkeit, erste Komponenten, welche beispielsweise dauerhaft an der Helmschale verbleiben, in der ersten Ebene aufzunehmen, während in der zweiten Ebene zweite Komponenten aufgenommen werden, die flexibel auswechselbar sein sollen. Dies ist mit Hilfe des in die Gewindehülse einschraubbaren Schraubmittels möglich. Die ersten Komponenten werden vorzugsweise zwischen einer Außenseite der Schale des Schutzhelms und dem Bund der Gewindehülse eingeklemmt und können ferner insbesondere Durchgangslöcher aufweisen, durch die die Gewindehülse hindurchragt. So ist es möglich, die ersten Komponenten sowohl kraft- als auch formschlüssig an der Helmschale aufzunehmen.

Die ersten und/oder zweiten Komponenten können Zubehörteile wie beispielsweise ein Nackenschutz, ein Sichtschutz, ein Ohrenschutz oder eine Clickrail zum lösbaren Befestigen von weiteren Komponenten oder weiteren Zubehörteilen oder Ähnlichem sein. Um mehrere Zubehörteile zu befestigen oder eine sichere Befestigung in der Clickrail zu ermöglichen, sind vorzugsweise mehrere Gewindehülsen in mehreren Sacklöchern eingebracht, wobei vorzugsweise wenigstens ein Teil der Sacklöcher symmetrisch zueinander in der Schale eingebracht ist.

Das Material, aus dem die Schale des ballistischen Schutzhelms hergestellt ist, ist, wie schon eingangs erwähnt, bevorzugterweise ein textiles Gewebe oder sind textile Lagen, die zusammen ein Schichtgelege bilden. Die textilen Lagen selbst sind vorzugsweise aus hochfesten technischen Geweben, wie beispielsweise Aramid, hergestellt. Die textilen Lagen bzw. das textile Gewebe kann mit einem Laminatmaterial, d.h. einem Matrixmaterial, verbunden sein. Als Materialien passen insbesondere diejenigen, die in EP 1 750 921 B1 erwähnt sind. Zudem kann die Schale des ballistischen Schutzhelms gemäß dem dort beschriebenen Verfahren hergestellt werden. Das Verbindungsmittel bzw. die Matrix kann ein Harz, Kunststoff oder Klebstoff sein. Beispielsweise eigenen sich Epoxidharz und Polyesterharz hierzu. Es können auch andere Harze Verwendung finden.

Weitere Merkmale der Erfindung werden aus der Beschreibung erfindungsgemäßer Ausführungsformen zusammen mit den Ansprüchen und den beigefügten Zeichnungen ersichtlich. Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des Umfangs der Erfindung, der durch die beigefügten Ansprüche definiert ist, anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung eines ballistischen Schutzhelms,
- Fig. 2: eine schematische teilweise Schnittdarstellung einer Gewindehülse,
- Fig. 3: eine schematische Draufsicht auf die Gewindehülse aus Fig. 2,

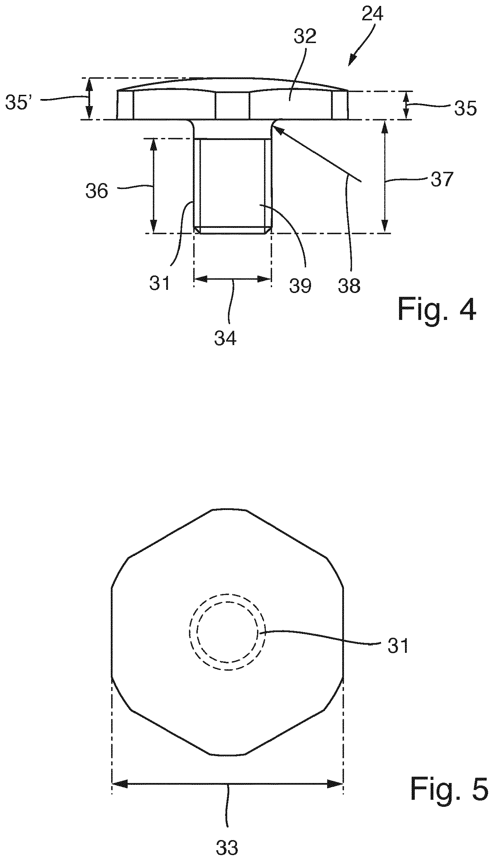

- Fig. 4: eine schematische Ansicht eines Schraubmittels,
- Fig. 5: eine Draufsicht auf das Schraubmittel aus Fig. 4 in schematischer Form,
- Fig. 6: eine schematische Schnittdarstellung eines weiteren ballistischen Schutzhelms,
- Fig. 7: eine schematische teilweise Schnittdarstellung einer weiteren Gewindehülse und
- Fig. 8: eine schematische Draufsicht auf die Gewindehülse aus Fig. 7.

In den Zeichnungen sind jeweils gleiche oder gleichartige Elemente und/oder Teile mit denselben Bezugsziffern versehen, so dass von einer erneuten Vorstellung jeweils abgesehen wird.

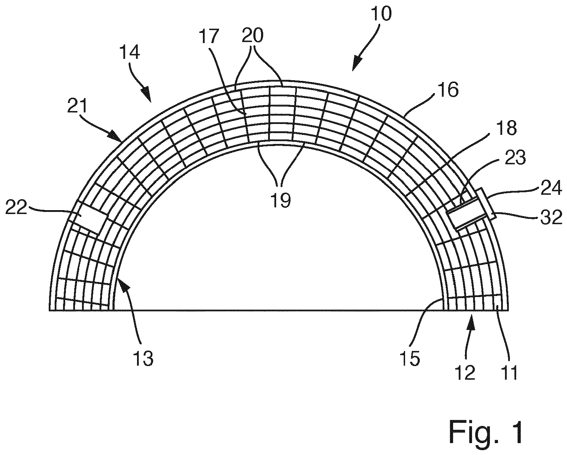

Fig. 1 zeigt schematisch eine Schnittdarstellung eines ballistischen Schutzhelms 10. Die Schale 21 des ballistischen Schutzhelms 10 ist aus einer Anzahl von in einer Verbindungsmatrix verbundenen textilen Lagen 11 gefertigt. Als Verbindungsmatrix kann ein Harz, wie ein Polyesterharz oder ein Epoxidharz dienen. Die textilen Lagen können auch miteinander verklebt sein. Um eine Delamination von anderen Lagen bei einem Beschuss mit einem Projektil zu verhindern, sind die textilen Lagen 11, die in dem Schichtgelege 12 angeordnet sind, mit Nähten 17, 18 vernäht. Die Nähte 17, 18 verlaufen im Wesentlichen radial von innen nach außen oder von außen nach innen, um die Lagen in radialer Richtung miteinander zu verbinden. Die Nähte 17, 18 können auch mäanderförmig vorgesehen sein, wobei ein Teil der Mäanderform eine Naht 17, 18 in radialer Richtung darstellt.

Durch die Nähte 17, 18 werden Abschnitte 19, 20 gebildet, die durch die Nähte 17, 18 voneinander getrennt sind. Die Außenseite 14 und die Innenseite 13 des ballistischen Schutzhelms 10 können jeweils mit einer Schutzschicht 15, 16 versehen sein. Bei dieser Schutzschicht 15, 16 kann es sich um eine textile Lage 11 handeln, die nach dem Vernähen des ballistischen Schutzhelms 10 und entsprechendem Pressen des ballistischen Schutzhelms 10, wie dieses in EP 1 750 921 B1 beschrieben ist, aufgeklebt oder laminiert werden.

In die Schale 21 sind in diesem Ausführungsbeispiel zwei Sacklöcher 22 eingebracht, wobei in der Darstellung der Fig. 1 das eine Sackloch 22 auf der linken Seite noch nicht mit einer Gewindehülse 23 versehen ist und das andere Sackloch 22 auf der rechten Seite mit einer Gewindehülse 23 versehen ist. In die Gewindehülse 23 ist ein Schraubmittel 24, umfassend einen Kopf 32 eingebracht. Die Länge der Gewindehülse 23 ist an die Tiefe des Sacklochs 22 angepasst, insbesondere im Wesentlichen gleich groß, so dass die Gewindehülse 23 mit der Außenseite 14 des ballistischen Schutzhelms 10 bündig ist. Das Schraubmittel 24 ist von der Länge 37 an die Länge des Inneren der Gewindehülse 23 angepasst, um eine feste Verbindung, d.h. eine sich möglichst nicht selbsttätig lösende Verbindung zu ermöglichen.

Für den Fall, dass keine weitere Komponente bzw. kein Zubehörteil an einer entsprechenden Stelle eines Sacklochs 22 des ballistischen Schutzhelms 10 angebracht werden soll, reicht es für die Benutzung des ballistischen Schutzhelms 10 aus, wenn das Schraubmittel 24 in die Gewindehülse 23 vollständig eingeschraubt ist. Für den Fall, dass ein Zubehörteil, wie beispielsweise eine Clickrail, angebracht werden soll, können entsprechende Schrauben verwendet werden, die etwas länger sind, um die Dicke des Zubehörteils an der Stelle, an der die Schraube dieses Zubehörteil durchdringt, zu berücksichtigen. Eine Clickrail kann beispielsweise dazu dienen, auf einfache Weise lösbar verbindbar weitere Komponenten zu befestigen, wie zum Beispiel ein Ohrenschutz, ein Sichtschutz, wie ein ballistisches Visier, oder Ähnliches.

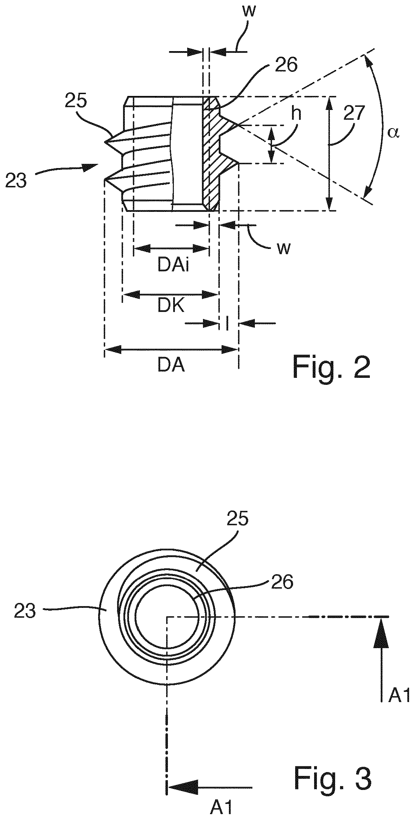

Fig. 2 zeigt schematisch in einer teilweisen Schnittdarstellung eine Gewindehülse 23. Der Schnitt ist entlang der Linie A1-A1 aus Fig. 3 vorgenommen. Fig. 3 zeigt eine Draufsicht der Gewindehülse 23 aus Fig. 2.

Die Gewindehülse 23 weist ein Außengewinde 25 auf, das zum Einschrauben in das Sackloch 22 dient. Das Außengewinde 25 hat eine Gewindeteilung h, die beispielsweise 1/7 bis 3/7, vorzugsweise 2/7, des Außendurchmessers D_{A} der Gewindehülse 23 ist. Das Außengewinde 25 hat zudem einen Flankenwinkel α zwischen 30° und 70°, bevorzugt zwischen 55° und 65°. Die Länge 27 des Außengewindes 25 ist an die Tiefe des Sacklochs 22 angepasst. Insbesondere ist die Länge 27 etwas mehr als die Hälfte der Dicke der Schale 21 des ballistischen Schutzhelms 10. Die Profiltiefe I des Außengewindes 25, d.h. die Gewindetiefe I, liegt bei 3/28 bis 2/7, insbesondere bei 1/7, des Außendurchmessers D_{A} der Gewindehülse 23.

Die Wandstärke W, d.h. der Kerndurchmesser D_{K} des Außengewindes 25, abzüglich des Außendurchmessers D_{AI} des Innengewindes 26 liegt in diesem Ausführungsbeispiel vorzugsweise bei 1,0 mm.

Das Schraubmittel 24 weist ein Schraubgewinde 39 auf, das von der Länge 37 an die Länge des Innengewindes 26 der Gewindehülse 23 angepasst ist. Der Außendurchmesser 34 des Gewindes des Schraubmittels 24 liegt im Bereich des Außendurchmessers D_{AI} des Innengewindes 26 der Gewindehülse 23. Das Schraubgewinde 39 kann im Übergang zum Kopf 32 des Schraubmittels 24 abgerundet sein. Es kann hier auch eine Fase vorgesehen sein. Die Abrundung bzw. Fase kann formkomplementär zu einer Fase oder Abrundung der Gewindehülse 23 im oberen Bereich, d.h. bei der Öffnung der Gewindehülse 23 zum Einschrauben in das Innengewinde 26 vorgesehen sein. Hierdurch wird eine gute Lössicherheit erzielt.

Um eine gute ballistische Eignung hervorzurufen, ist ein relativ großer Kopf 32 beim Schraubmittel 24 vorgesehen. Der Kopf 32 hat eine Kopfbreite 33, die mindestens doppelt so groß ist wie der Außendurchmesser 34 des Außengewindes 31 des Schraubgewindes 39 des Schraubmittels 24. Zudem ist der Kopf 32 an der dünnsten Stelle ausreichend dick, nämlich mit einer Kopfdicke 35, die die ballistischen Eigenschaften des Schutzhelms 10 unterstützen. In der Mitte des Kopfes 32 ist die Kopfdicke 35` etwas größer als am Rand.

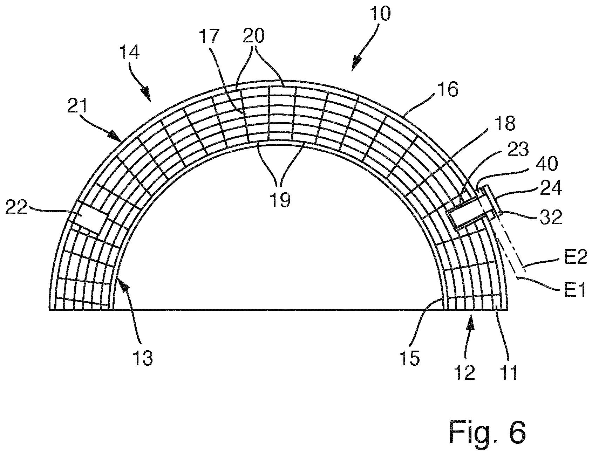

Fig. 6 zeigt in einer schematischen Schnittdarstellung einen weiteren ballistischen Schutzhelm 10. Der Aufbau der Schale 21 des ballistischen Schutzhelms 10 ist bereits im Zusammenhang mit Fig. 1 erläutert worden. In die Schale 21 sind beispielhaft zwei Sacklöcher 22 eingebracht, wobei in der Darstellung von Fig. 6 das Sackloch 22 auf der linken Seite noch nicht mit einer Gewindehülse 23 versehen ist und das gegenüberliegende Sackloch 22 auf der rechten Seite mit einer Gewindehülse 23 versehen ist, die einen Bund 40 umfasst. In die Gewindehülse 23 ist ein Schraubmittel 24, umfassend einen Kopf 32, eingebracht.

Die Gewindehülse 23 bietet aufgrund ihrer Ausgestaltung, umfassend einen Bund 40, die Möglichkeit, erste Komponenten in einer ersten Ebene E1 (dargestellt in gestrichelter Linie) als auch in einer zweiten Ebene E2 (dargestellt in strichpunktierter Linie) aufzunehmen. Die in der ersten Ebene E1 aufgenommenen ersten Komponenten werden zwischen dem Bund 40 der Gewindehülse 23 und einer Außenseite der Schale 21 des Schutzhelms 10 aufgenommen. Bei diesen ersten Komponenten handelt es sich vorzugsweise um solche, welche dauerhaft an dem Schutzhelm 10 verbleiben, beispielsweise einem Nackenschutz oder dergleichen. Eine solche erste Komponente ist beispielsweise mit Löchern versehen, durch welche die Gewindehülse 23 hindurchgeführt wird. Beim Einschrauben der Gewindehülse 23 in die Schale 21 des Schutzhelms 10 kann außerdem eine Klemmverbindung zwischen dieser ersten Komponente und der Außenseite der Schale 21 des Schutzhelms 10 realisiert werden. Zweite Komponenten können in der zweiten Ebene E2 mithilfe des Schraubmittels 24 aufgenommen werden. Da das Schraubmittel 24 eine flexible Montage dieser zweiten Komponenten ermöglicht, bietet es sich an, als zweite Komponenten solche vorzusehen, welche von Zeit zu Zeit ausgewechselt werden. Für den Fall, dass keine weitere Komponente bzw. kein Zubehörteil an einer entsprechenden Stelle eines Sacklochs 22 des ballistischen Schutzhelms 10 angebracht werden soll, reicht es für die Benutzung des ballistischen Schutzhelms 10 aus, wenn das Schraubmittel 24 in die Gewindehülse 23 vollständig eingeschraubt ist.

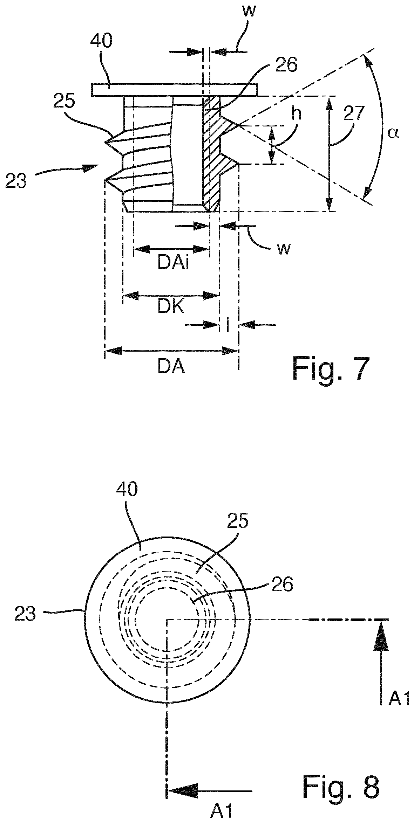

Fig. 7 zeigt schematisch in einer teilweisen Schnittdarstellung die mit einem Bund 40 versehene Gewindehülse 23. Der Bund 40 ist als ein flanschartiger Kragen ausgestaltet, er überragt einen Außendurchmesser D_{A} der Gewindehülse 23 in einer radialen Richtung, welche quer, insbesondere senkrecht zu einer Längserstreckungsrichtung (welche der Einschraubrichtung der Gewindehülse 23 entspricht) der Gewindehülse 23 liegt. Der Bund 40 ist vorzugsweise einteilig mit der Gewindehülse 23 ausgebildet.

Fig. 8 zeigt eine Draufsicht auf die in Fig. 7 gezeigte Gewindehülse 23. Da der Bund 40 das Außengewinde 25 überragt, ist dieses in der Draufsicht auf die Oberseite der Gewindehülse 23 nicht sichtbar und daher in gebrochener Linie dargestellt. Mittig gibt der Bund 40 den Durchgang in Richtung des Innengewindes 26 der Gewindehülse 23 frei. Im Hinblick auf die Verwendung des Schraubmittels 24 weist also die Gewindehülse 23, welche den Bund 40 umfasst, die gleiche Funktionalität auf, wie die zuvor im Zusammenhang mit den Fig. 1 bis 3 beschriebene Gewindehülse 23.

### Bezugszeichenliste

- 10: Schutzhelm
- 11: textile Lage
- 12: Schichtgelege
- 13: Innenseite
- 14: Außenseite
- 15: Schutzschicht
- 16: Schutzschicht
- 17: Naht
- 18: Naht
- 19: Abschnitt
- 20: Abschnitt
- 21: Schale
- 22: Sackloch
- 23: Gewindehülse
- 24: Schraubmittel
- 25: Außengewinde
- 26: Innengewinde
- 27: Länge
- 31: Außengewinde
- 32: Kopf
- 33: Kopfbreite
- 34: Außendurchmesser
- 35, 35': Kopfdicke
- 36: Gewindelänge
- 37: Länge
- 38: Krümmung
- 39: Schraubgewinde
- 40: Bund
- E1: erste Ebene
- E2: zweite Ebene
- h: Gewindeteilung
- I: Gewindetiefe
- α: Flankenwinkel
- D_{A}: Außendurchmesser
- D_{K}: Kerndurchmesser
- D_{AI}: Außendurchmesser des Innengewindes
- W: Wandstärke

## Patentansprüche

1. Ballistischer Schutzhelm (10), umfassend eine Schale (21), umfassend ein Schalenmaterial, das aus einer Anzahl in einer Verbindungsmatrix verbundener textiler Lagen (11, 12) gefertigt ist, **dadurch gekennzeichnet, dass** die Schale (21) ein Sackloch (22) aufweist, wobei eine Gewindehülse (23) in das Sackloch (22) eingebracht ist, wobei die Gewindehülse (23) ein Außengewinde (25) aufweist, das in das Schalenmaterial, das das Sackloch (22) in Umfangsrichtung umgibt, eindringt und wobei die Gewindehülse (23) ein Innengewinde (26) zur Verbindung mit einem ein Außengewinde (31) aufweisenden Schraubmittel (24) aufweist.

2. Ballistischer Schutzhelm (10) nach Anspruch 1, **dadurch gekennzeichnet, dass** die Gewindehülse (23) in dem Sackloch (22) eingeklebt ist.

3. Ballistischer Schutzhelm (10) nach Anspruch 1 oder 2, **dadurch gekennzeichnet, dass** das Sackloch (22) eine Tiefe von 4 mm bis 10 mm, insbesondere 5 mm bis 8 mm, insbesondere 6 mm bis 7 mm, hat.

4. Ballistischer Schutzhelm (10) nach Anspruch 3, **dadurch gekennzeichnet, dass** die Länge (27) der Gewindehülse (23) an die Tiefe des Sacklochs (22) angepasst ist, insbesondere im Wesentlichen gleich der Tiefe ist.

5. Ballistischer Schutzhelm (10) nach einem der Ansprüche 1 bis 4, **dadurch gekennzeichnet, dass** die Gewindeteilung (h) des Außengewindes (25) der Gewindehülse (23) 1/7 bis 3/7, insbesondere 2/7, eines Außendurchmessers (D_{A}) der Gewindehülse (23) ist.

6. Ballistischer Schutzhelm (10) nach einem der Ansprüche 1 bis 5, **dadurch gekennzeichnet, dass** die Gewindetiefe (I) des Außengewindes (25) 3/28 bis 2/7, insbesondere 1/7, des eines Außendurchmessers (D_{A}) der Gewindehülse (23) ist.

7. Ballistischer Schutzhelm (10) nach einem der Ansprüche 1 bis 6, **dadurch gekennzeichnet, dass** die Wandstärke (W) der Gewindehülse (23) von 0,5 mm bis 3,0 mm, insbesondere von 0,8 mm bis 2,0 mm, insbesondere von 0,9 mm bis 1,5 mm, insbesondere von 1,0 mm bis 1,2 mm, ist.

8. Ballistischer Schutzhelm (10) nach einem der Ansprüche 1 bis 7, **dadurch gekennzeichnet, dass** die Gewindehülse (23) wenigstens an einem Teil, der in einem Zustand, in dem die Gewindehülse (23) in das Sackloch (22) eingebracht ist, sichtbar ist, eine Warnfarbe aufweist.

9. Ballistischer Schutzhelm (10) nach einem der Ansprüche 1 bis 8, **dadurch gekennzeichnet, dass** das das Außengewinde (31) aufweisende Schraubmittel (24) in die Gewindehülse (23) eingeschraubt ist und insbesondere einen Kopf (32) aufweist, der eine Kopfbreite (33) aufweist, die zweimal bis viermal, insbesondere dreimal, so groß wie ein Außendurchmesser (34) des Außengewindes (31) ist.

10. Ballistischer Schutzhelm (10) nach Anspruch 9, **dadurch gekennzeichnet, dass** die Dicke (35, 35') des Kopfes (32) an der dünnsten Stelle größer ist als die Wandstärke (W) der Gewindehülse (23).

11. Ballistischer Schutzhelm (10) nach einem der Ansprüche 1 bis 10, **dadurch gekennzeichnet, dass** die Gewindehülse (23) einen Bund (40) umfasst.

12. Ballistischer Schutzhelm (10) nach einem der Ansprüche 1 bis 11, **dadurch gekennzeichnet, dass** die Gewindehülse (23) zum Anbringen von zumindest einer Komponente, insbesondere zumindest eines Zubehörteils, an dem Schutzhelm (10) dient.

13. Ballistischer Schutzhelm (10) nach Anspruch 11 und 12, **dadurch gekennzeichnet, dass** die Gewindehülse (23) zum Anbringen zumindest einer ersten und/oder zumindest einer zweiten Komponente dient, wobei die zumindest eine erste Komponente zwischen der Schale des Schutzhelms (10) und dem Bund der Gewindehülse (23) aufgenommen ist und die zumindest eine zweite Komponente mittels des Schraubmittels (24) an der Gewindehülse (23) aufgenommen ist.

14. Ballistischer Schutzhelm (10) nach Anspruch 12 oder 13, **dadurch gekennzeichnet, dass** die zumindest eine Komponente ein Nackenschutz, ein Sichtschutz, ein Ohrenschutz und/oder eine Clickrail zum lösbaren Befestigen von zumindest einer weiteren Komponente, insbesondere zumindest eines weiteren Zubehörteils ist.

15. Ballistischer Schutzhelm (10) nach einem der Ansprüche 1 bis 14, **dadurch gekennzeichnet, dass** mehrere Gewindehülsen (23) in mehreren Sacklöchern (22) eingebracht sind, wobei vorzugsweise wenigstens ein Bruchteil der Sacklöcher (22) symmetrisch zueinander in die Schale (21) eingebracht ist.

## Claims

1. A ballistic protective helmet (10) comprising a shell (21) comprising a shell material that is produced from a number of textile layers (11, 12) connected in a connection matrix, **characterized in that** the shell (21) has a blind hole (22), wherein a threaded sleeve (23) is introduced into the blind hole (22), wherein the threaded sleeve (23) has an outer thread (25) that penetrates into the shell material which surrounds the blind hole (22) in a peripheral direction, and wherein the threaded sleeve (23) has an inner thread (26) for connecting to a screwing means (24) having an outer thread (31).

2. The ballistic protective helmet (10) according to claim 1, **characterized in that** the threaded sleeve (23) is glued in the blind hole (22).

3. The ballistic protective helmet (10) according to claim 1 or 2, **characterized in that** the blind hole (22) has a depth of 4 mm to 10 mm, in particular 5 mm to 8 mm, in particular 6 mm to 7 mm.

4. The ballistic protective helmet (10) according to claim 3, **characterized in that** the length (27) of the threaded sleeve (23) is adapted to the depth of the blind hole (22), in particular is substantially the same depth.

5. The ballistic protective helmet (10) according to one of claims 1 to 4, **characterized in that** the thread pitch (h) of the outer thread (25) of the threaded sleeve (23) is 1/7 to 3/7, in particular 2/7, of an outer diameter (D_{A}) of the threaded sleeve (23).

6. The ballistic protective helmet (10) according to one of claims 1 to 5, **characterized in that** the thread depth (I) of the outer thread (25) is 3/28 to 2/7, in particular 1/7, of the outer diameter (D_{A}) of the threaded sleeve (23).

7. The ballistic protective helmet (10) according to one of claims 1 to 6, **characterized in that** the wall thickness (W) of the threaded sleeve (23) is from 0,5 mm to 3,0 mm, in particular from 0,8 mm to 2,0 mm, in particular from 0,9 mm to 1,5 mm, in particular from 1,0 mm to 1,2 mm.

8. The ballistic protective helmet (10) according to one of claims 1 to 7, **characterized in that** the threaded sleeve (23) has a warning color, at least on a part that is visible in a state in which the threaded sleeve (23) is introduced into the blind hole (22).

9. The ballistic protective helmet (10) according to one of claims 1 to 8, **characterized in that** the screwing means (24) having the outer thread (31) is screwed into the threaded sleeve (23), and in particular has a head (32) that has a head width (33) which is two to four times as large, in particular three times, as an outer diameter (34) of the outer thread (31).

10. The ballistic protective helmet (10) according to claim 9, **characterized in that** the thickness (35, 35') of the head (32) at the thinnest point is greater than the wall thickness (W) of the threaded sleeve (23).

11. The ballistic protective helmet (10) according to one of claims 1 to 10, **characterized in that** the threaded sleeve (23) comprises a shoulder (40).

12. The ballistic protective helmet (10) according to one of claims 1 to 11, **characterized in that** the threaded sleeve (23) serves to attach at least one component, in particular at least one accessory part, to the protective helmet (10).

13. The ballistic protective helmet (10) according to claims 11 and 12, **characterized in that** the threaded sleeve (23) serves to attach at least one first and/or at least one second component, wherein the at least one first component is accommodated between the shell of the protective helmet (10) and the shoulder of the threaded sleeve (23), and the at least one second component is accommodated at the threaded sleeve (23) by means of the screwing means (24).

14. The ballistic protective helmet (10) according to claim 12 or 13, **characterized in that** the at least one component is a neck guard, a visual protection, an ear protection and/or a click rail for releasably attaching at least one additional component, in particular at least one additional accessory part.

15. The ballistic protective helmet (10) according to one of claims 1 to 14, **characterized in that** a plurality of threaded sleeves (23) is introduced into a plurality of blind holes (22), wherein preferably at least a fraction of the blind holes (22) are introduced symmetrical to each other into the shell (21).

## Revendications

1. Casque de protection balistique (10), comprenant une coque (21), comprenant un matériau de coque qui est constitué d'un certain nombre de couches textiles (11, 12) reliées dans une matrice de liaison, **caractérisé en ce que** la coque (21) présente un trou borgne (22), un manchon fileté (23) étant inséré dans le trou borgne (22), le manchon fileté (23) ayant un filetage externe (25) qui pénètre dans le matériau de coque entourant le trou borgne (22) de façon périphérique, et le manchon fileté (23) ayant un filetage interne (26) pour le raccordement à un moyen à vis (24) ayant un filetage externe (31).

2. Casque de protection balistique (10) selon la revendication 1, **caractérisé en ce que** le manchon fileté (23) est collé dans le trou borgne (22).

3. Casque de protection balistique (10) selon la revendication 1 ou la revendication 2, **caractérisé en ce que** le trou borgne (22) a une profondeur de 4 mm à 10 mm, notamment de 5 mm à 8 mm, en particulier de 6 mm à 7 mm.

4. Casque de protection balistique (10) selon la revendication 3, **caractérisé en ce que** la longueur (27) du manchon fileté (23) est adaptée à la profondeur du trou borgne (22), notamment est sensiblement égale à la profondeur.

5. Casque de protection balistique (10) selon l'une des revendications 1 à 4, **caractérisé en ce que** le pas de filetage (h) du filetage extérieur (25) du manchon fileté (23) va de 1/7 à 3/7, notamment est de 2/7, d'un diamètre extérieur (D_{A}) du manchon fileté (23).

6. Casque de protection balistique (10) selon l'une des revendications 1 à 5, **caractérisé en ce que** la profondeur de filetage (I) du filetage extérieur (25) va de 3/28 à 2/7, notamment est de 1/7, d'un diamètre extérieur (D_{A}) manchon fileté (23).

7. Casque de protection balistique (10) selon l'une des revendications 1 à 6, **caractérisé en ce que** l'épaisseur de paroi (W) du manchon fileté (23) va de 0,5 mm à 3,0 mm, notamment de 0,38 mm à 2,0 mm, en particulier de 0,9 mm à 1,5 mm, notamment de 1,0 mm à 1,2 mm.

8. Casque de protection balistique (10) selon l'une des revendications 1 à 7, **caractérisé en ce que** le manchon fileté (23) a une couleur d'avertissement au moins sur une partie qui est visible dans un état dans lequel le manchon fileté (23) est inséré dans le trou borgne (22).

9. Casque de protection balistique (10) selon l'une des revendications 1 à 8, **caractérisé en ce que** le moyen à vis (24) comportant le filetage extérieur (31) est vissé dans le manchon fileté (23) et présente notamment une tête (32) qui a une largeur de tête (33) qui est de deux à quatre fois, en particulier trois fois, plus grande qu'un diamètre extérieur (34) du filetage extérieur (31).

10. Casque de protection balistique (10) selon la revendication 9, **caractérisé en ce que** l'épaisseur (35, 35') de la tête (32) au point le plus fin est supérieure à l'épaisseur de paroi (W) du manchon fileté (23).

11. Casque de protection balistique (10) selon l'une des revendications 1 à 10, **caractérisé en ce que** le manchon fileté (23) comprend une collerette (40).

12. Casque de protection balistique (10) selon l'une des revendications 1 à 11, **caractérisé en ce que** le manchon fileté (23) sert à fixer au moins un composant, notamment au moins un accessoire, au casque de protection (10).

13. Casque de protection balistique (10) selon les revendications 11 et 12, **caractérisé en ce que** le manchon fileté (23) sert à fixer au moins un premier et/ou au moins un deuxième composant, ledit au moins un premier composant étant reçu entre la coque du casque de protection (10) et la collerette du manchon fileté (23) et ledit au moins un deuxième composant étant reçu sur le manchon fileté (23) au moyen des moyens à vis (24).

14. Casque de protection balistique (10) selon la revendication 12 ou la revendication 13, **caractérisé en ce que** ledit au moins un composant est une protection du cou, une protection anti-regard, une protection auditive et/ou un clickrail pour fixer de manière amovible au moins un autre composant, en particulier au moins un autre accessoire.

15. Casque de protection balistique (10) selon l'une des revendications 1 à 14, **caractérisé en ce que** des manchons d'une pluralité de manchons filetés (23) sont introduits dans une pluralité de trous borgnes (22), au moins une partie des trous borgnes (22) étant de préférence pratiqués symétriquement les uns par rapport aux autres dans la coque (21)..
